## Europäisches Patentamt
## European Patent Office
## Office européen des brevets

(19)

(11) Veröffentlichungsnummer: **0 019 207**
**B2**

(12) **NEUE EUROPÄISCHE PATENTSCHRIFT**

(45) Veröffentlichungstag der neuen Patentschrift:
**10.01.90**

(51) Int. Cl.⁴: **C 04 B 28/14**, C 04 B 24/00,
C 04 B 18/26

(21) Anmeldenummer: **80102498.5**

(22) Anmeldetag: **07.05.80**

(54) Verfahren zum Herstellen von Gipsbauteilen.

(30) Priorität: **14.05.79 DE 2919311**

(43) Veröffentlichungstag der Anmeldung:
**26.11.80 Patentblatt 80/24**

(45) Bekanntmachung des Hinweises auf die Patenterteilung:
**04.05.83 Patentblatt 83/18**

(45) Bekanntmachung des Hinweises auf die Entscheidung
über den Einspruch:
**10.01.90 Patentblatt 90/2**

(84) Benannte Vertragsstaaten:
**AT CH DE FR GB LI SE**

(56) Entgegenhaltungen:
AT-A- 268 967
AT-B- 26 043
DE-A- 1 571 466
DE-A- 2 164 051
DE-A- 2 240 926
DE-A- 2 462 305
DE-A- 2 805 523
DE-A- 2 808 423
DE-A- 3 247 009
DE-B- 2 023 853
DE-B- 2 449 015
DE-C- 100 978
DE-C- 143 380
DE-C- 181 223
DE-C- 191 141

(73) Patentinhaber: **Kossatz, Gert, Prof. Dr.-Ing., Im
Gettelhagen 156, D-3300 Braunschweig (DE)**

(72) Erfinder: **Kossatz, Gert, Prof. Dr.-Ing., Im
Gettelhagen 156, D-3300 Braunschweig (DE)**

(56) Entgegenhaltungen: (Fortsetzung)
DE-C- 205 380
DE-C- 207 540
DE-C- 927 735
DE-C- 1 170 853
FR-A- 1 461 690
HU-A- 16 219
HU-A- 173 986
US-A- 1 702 965
US-A- 1 862 318
US-A- 3 764 357
US-A- 3 809 566

Chemical Abstract, Vol. 91(1979) S.272, 95776y
Ullmanns Encyklopädie der techn. Chemie, 1957, Bd.8,
S.113ff.

Die Akte enthält technische Angaben, die nach dem
Eingang der Anmeldung eingereicht wurden und die
nicht in dieser Patentschrift enthalten sind.

EP 0 019 207 B2

## Beschreibung

Die Erfindung betrifft ein Verfahren nach dem Oberbegriff des Anspruchs 1.

Ein derartiges Verfahren ist samt zugehöriger Einrichtung aus der US-Patentschrift 3 809 566 vorbekannt; dabei werden dem Gips zerdrückbare wassergetränkte Teilchen zugesetzt, denen das zur Rehydratisierung erforderliche Wasser dadurch entzogen wird, dass das Gemenge einem hohen Druck zwischen 3,4 bis 51 N/mm² ausgesetzt wird. Deshalb bedarf dieses Verfahren in der Praxis entsprechend stark dimensionierter Pressen und ist nicht für Bauteile niedrigerer Dichte geeignet. Ausserdem sind druckfeste wassergetränkte Teilchen für dieses Verfahren nicht verwendbar.

Technische Gipse, wozu Halbhydratplaster und wasserfreie Plaster gehören, werden unter Zugabe von Wasser wieder zu Dihydrat rehydratisiert. Bei diesem Vorgang lösen sich zunächst Halbhydrat und Anhydrit im Anmachwasser und bilden, bezogen auf das Dihydrat, übersättigte Lösungen, aus denen der Gips rasch in sich verfilzenden Kristallen auskristallisiert. Die Rehydratisierung ist ein exothermer Vorgang; denn bei der Reaktion von Plaster und Wasser wird Energie freigesetzt.

Die zur vollständigen Rehydratisierung erforderliche Wassermenge, die also chemisch gebunden wird, ist abhängig vom Reinheitsgrad der technischen Gipse und liegt in der Regel zwischen 14 und 21%. Bei der Rehydratisierung der technischen Gipse zu Dihydrat muss jedoch bei den üblichen Nassverfahren, bei denen der Gips in breiiger oder flüssiger Konsistenz verarbeitet wird, mit einem erheblichen Wasserüberschuss gearbeitet werden; so beträgt das notwendige Wasser-Gips-Verhältnis bei Hartformgips etwa 0,4 und bei Baugips 0,7 bis 0,8. Das überschüssige Anmachwasser tritt zum Teil bereits während der Formbildung aus, zum Teil ist es nach dem Erhärten im Dihydrat als freies Wasser enthalten und wird in der Regel bei vorgefertigten Bauteilen, wie Gipsdielen, Gipskartonplatten oder Gipsfaserplatten, unter Zufuhr von Wärme, also durch technische Trocknung, ausgetrieben.

Man hat bereits versucht, diesen Wärmeaufwand dadurch zu begrenzen, dass man von vornherein möglichst wenig überschüssiges Anmachwasser in das Gemenge einbringt. Dies geschieht zum Beispiel dadurch, dass man in einen aufgelockerten Strom von pulverigem Plaster Wasser eindüst oder jenen Strom mit feinen Eiskristallen vermischt. Beide Verfahren befriedigen in der Praxis nicht in jedem Fall, da u. a. beim Eindüsen ein zusätzliches Mischen von Gips und Wasser auf der Formungsunterlage sich kaum vermeiden lässt und bei der Verwendung von Eiskristallen ein zusätzlicher Wärmeaufwand erforderlich ist.

In der US-A 3 764 357 wird ein Verfahren zur Herstellung von Bauplatten beschrieben, bei dem Aggregatteilchen, beispielsweise Polystyrolperlen, mit einem flüssigen wässrigen Medium vermischt werden, so das sich das flüssige Medium auf der Oberfläche der Aggregatteilchen abscheidet, und dann werden die auf der Oberfläche benetzten Aggregatteilchen mit Gips oder Zement vermischt, wobei der Wassergehalt des Gemisches nicht ausreicht, um den Gips oder Zement vollständig zu hydratisieren, und daher wird zusätzliches Wasser beigemischt. Bei diesem bekannten Verfahren werden, wie aus dem dort angegebenen Beispiel III hervorgeht, Wassergipswerte von $w = 0,44$ nicht unterschritten. Ein Wassergipswert von $w = 0,3$, wie er nach dem erfindungsgemässen Verfahren ohne Schwierigkeiten realisiert wurde, ist nach dem bekannten Verfahren nicht möglich. Bei dem bekannten Verfahren wird eine formbare zusammenhängende Matrix erzeugt, die dann – in Formen gebracht – aushärtet. Diese Masse kann gespritzt, gegossen oder mit einer Kelle verstrichen werden. Schliesslich wird in der genannten US-A 3 764 357 ein Verfahren beschrieben, bei dem das den Teilchen zugegebene Wasser ausdrücklich nicht ausreicht, um eine Aushärtung des Zements oder Gipses zu erreichen. Zusätzliches Wasser muss nachträglich zugegeben werden, um ein Aushärten der Mischung zu erreichen. Durch dieses spezielle Verfahren ist auch die einzubringende Menge an Bindemittel beschränkt. Deshalb ist ein mehrfaches Befeuchten und Einstäuben mit Bindemittel erforderlich, um eine grössere Bindemittelschicht auf den Teilchen zu erhalten. Das bekannte Verfahren besitzt somit mehrere Verfahrensschritte, was nachteilig ist.

In der US-A 3 809 566 wird ein Verfahren zur Herstellung von Bauteilen beschrieben, bei dem calcinierter Gips und Wasser unter Druck zur Rehydratisierung des Gipses vermischt werden und bei dem dann das entstehende Gemisch abbinden und aushärten kann. Das Wasser wird zugegeben, indem ein mit Wasser gesättigtes Material mit dem Gips vermischt wird und Druck angewendet wird. Neben der Abgrenzung durch den anzuwendenden Pressdruck und die Dichte des Bauteils liegt ein weiterer Unterschied darin, dass bei dem bekannten Verfahren ausdrücklich «zerdrückbares» Material eingesetzt wird, das Trägermaterial also zerstört wird. Erst hierdurch wird das gespeicherte Wasser freigesetzt.

Die DE-A 2 240 926 und die DE-A 2 805 523 betreffen ähnliche Verfahren. In beiden Fällen wird – vereinfacht ausgedrückt – die Verarbeitungsfeuchte von Chemiegips (in der Form von Dihydrat) dazu benutzt, das Kristallisationswasser für zugemischtes Halbhydrat bereitzustellen. In beiden Fällen werden relativ hohe Drücke angewandt. Es entstehen Bauteile hoher Dichte. So wird in Anspruch 15 der DE-A 2 805 523 ein Druck von 30 bis 250 kp/cm² (= 3 bis 25 N/mm²) und in der DE-A 2 240 926 auf Seite 3 der Beschreibung ein Druck von 150 bis 450 kp/cm² (= 15 bis 45 N/mm²) angegeben. In der DE-A 2 805 523 wird die Teilchengrösse des als Wasserträger eingesetzten Chemiegipses mit vorzugsweise im Mittel 40 µm (0,004 mm) angegeben. Solche kleinen Teilchen zeigen ein unbefriedigendes Formungs- bzw. Streuverhalten.

Die US-A 1 702 965 betrifft ein Verfahren, bei dem mit einem erheblichen Wasserüberschuss und einer breiigen Konsistenz gearbeitet wird. Mittels dieses Verfahrens soll es möglich sein, die zugesetzte Wassermenge gegenüber der traditionellen Gipsverarbeitung zu erhöhen, um so den Porenraum der Gipsbauteile zu erhöhen und damit deren Dichte herabzusetzen.

Es ist deshalb Aufgabe der Erfindung, ein Verfahren der eingangs angegebenen Art aufzuzeigen, bei dem die vorstehend geschilderten Nachteile nicht bestehen, bei dem also in einfacher, für die Praxis brauchbarer Weise unter Umgehung der breiig-flüssigen Phase dem Plaster durch Zugabe von als Wasserdepots wirkenden Partikeln nur die zur Rehydratisierung und zur Formung als rieselfähiges Gut in einem Halbtrockenverfahren erforderliche Anmachwassermenge zugesetzt wird und demnach nach dem Erhärten des Bauteils nur wenig Überschusswasser ausgetrieben werden muss. Diese Aufgabe wird durch die im Kennzeichnungsteil des Anspruches 1 niedergelegten Merkmale gelöst.

Bei den erfindungsgemässen Verfahren wirken die zugegebenen Teilchen als Wasserdepot. Bei dem erfindungsgemässen Verfahren können dem Anmachwasser an sich bekannte Beschleunigungs- oder Verzögerungsmittel, an sich bekannte Verflüssigungs- oder Fliessmittel, die die Oberflächenspannung des Wassers herabsetzen, einen schmierenden Oberflächenfilm erzeugen oder eine Kombination beider Effekte ergeben, hydrophobierende Mittel, Mittel, die die Korrosionsneigung von Bewehrungsstoffen herabsetzen, Mittel, welche die Haftfestigkeit zu Kartonbahnen und Faserwerkstoffen verbessern, und/oder Farbstoffe zugesetzt werden.

Durch Beschleunigungs- bzw. Verzögerungsmittel lässt sich das Erstarrungsverhalten zeitlich beeinflussen. Durch Zusatz von Verflüssigungs- oder Fliessmitteln, wie sie aus der Betontechnologie bekannt sind, lässt sich die erforderliche Anmachwassermenge reduzieren, da die Oberflächenspannung des Wassers herabgesetzt bzw. ein schmierender Oberflächenfilm erzeugt wird (vgl. Aignesberger, A. und H. Krieger: «Zusatz von anionischen Melaminharzlösungen zu Zement und Gips», Zement-Kalk-Gips 21 [1968], 10, Seiten 415 bis 419; Bertoldi, G.A.: «Untersuchungen zur Beeinflussung des Versteifungsanfangs und Versteifungsendes an Stuckgips», Zement-Kalk-Gips 29 [1976], 5, Seiten 223 bis 226).

Durch Zusatz hydrophobierender Mittel kann das fertige Bauteil vor Wasseraufnahme geschützt werden.

Bei dem erfindungsgemässen Verfahren lassen sich auch geschichtete Gipsbauteile bzw. Verbundbauteile, insbesondere Gipsplatten, die aus verschiedenen Lagen bestehen, herstellen. Dazu wird das erfindungsgemässe Verfahren für die verschiedenen Schichten angewendet, wobei man die einzelnen Schichten nacheinander in einem Arbeitsablauf aufbringt. Die Verbundbauteile können aus mehreren Schichten, vorzugsweise zwei bis fünf, besonders bevorzugt drei Schichten, bestehen, wobei nichtaufeinanderfolgende Schichten auch gleiche Zusammensetzung aufweisen können. Beispielsweise kann man Verbundplatten herstellen, indem die beiden äusseren Schichten aus dem gleichen Material und die innere Schicht aus einem anderen Material besteht. Man kann so die Eigenschaften der Gipsbauplatten hinsichtlich der Festigkeit etc. variieren.

Die zugesetzten Teilchen können durch ihre poröse Beschaffenheit leicht Wasser aufnehmen und so lange behalten, bis sie es durch innige Berührung mit dem Gips an diesen mit abgeben, ohne dass zum Entwässern der Teilchen ein nennenswerter Druck ausgeübt werden muss; vielmehr kann die erforderliche innige Berührung durch blosses Rütteln herbeigeführt werden, dessen Stärke und Dauer versuchsmässig bestimmt werden. Ebenfalls versuchsmässig wird die einzubringende Schütthöhe des Gemenges ermittelt, und zwar so, dass sich nach erfolgter Abbindung die gewünschte Bauteildicke einstellt.

Vor allem bei dünnen Bauteilen genügt gegebenenfalls ein blosses Abstreichen oder ein leichtes Walzen unter Berücksichtigung der gewünschten Bauteildicke. Vorteilhafterweise kann auch ein geringer Flächendruck unter etwa 1,5 N/mm² aufgewendet werden, um die Dickengenauigkeit plattenförmiger Bauteile zu erhöhen.

Die folgenden Beispiele erläutern die Erfindung.

Beispiel 1

1 Gewichtsteil eines Holzfasergranulats wurde mit 2 Gewichtsteilen Wasser versetzt und mit 5 Gewichtsteilen eines handelsüblichen Stuckgipses vermischt. Die Mischung wurde auf eine Formungsunterlage geschüttet und mit einem spezifischen Flächendruck von 0,8 N/mm² auf die gewünschte Dicke verdichtet. Die abgebundene Gipsplatte wurde nach 25 Min. vom Formstrang abgenommen.

Der Wassergipswert betrug w = 0,4, das Zuschlagstoff—Gips-Verhältnis betrug x = 0,2. Die Dichte der Platte betrug ca. 900 kg/m³.

Beispiel 2

Es wurde eine Gipsplatte entsprechend dem Beispiel 1 hergestellt, die einen symmetrisch zur Plattenebene angeordneten dreischichtigen Aufbau aufwies. Hierbei wurde für die Mittelschicht Fasergranulat der Siebmaschenweite 3 mm bis 10 mm bei einem Wassergipswert von w = 0,4 und einem Zuschlagstoff-Gips-Verhältnis von x = 0,3 verwendet. Die beiden Deckschichten bestanden aus faserbewehrtem Stuckgips mit einem Wassergipswert von w = 0,35 und einem Zuschlagstoff-Gips-Verhältnis von x = 0,1.

Patentansprüche

1. Verfahren zum Herstellen von Gipsbauteilen mit einer Dichte unter 1000 kg/m³, insbesondere Gipsplatten, bei dem die zur Rehydratisierung des Bindemittels und Formung des Mischguts erforderliche Anmachwassermenge ausschliesslich durch verteilt zugesetzte wassergetränkte Teilchen eingebracht wird, dadurch gekennzeichnet, dass die wassergetränkten Teilchen aus Holzspänen, Holzfasergranulat oder Rinde bestehen, dass die wassergetränkten Teilchen und der pulverförmige Gips unter Bildung eines rieselfähigen Gemenges aus einzelnen Teilchen vermischt werden, das Gemenge durch Rütteln, Abstreichen oder Walzen oder durch Anwendung eines geringen Flächendrucks unter etwa 1,5 N/mm² auf die gewünschte Form, insbesondere die gewünschte Plattendicke des Gipsbauteils, gebracht wird, so dass durch innige Berührung Wasser aus den porösen Teilchen zu dem Gips übertritt.

2. Verfahren nach Anspruch 1, dadurch gekennzeichnet, dass man zur Herstellung eines geschichteten Aufbaus das Verfahren zwei- oder mehrmals unmittelbar aufeinanderfolgend durchführt, wobei die Herstellung der zweiten oder darauffolgenden Schicht jeweils erfolgt, solange die erste bzw. untere Schicht noch nicht abgebunden ist.

3. Verfahren nach Anspruch 2, dadurch gekennzeichnet, dass man Verbundplatten aus zwei bis fünf Schichten herstellt, wobei nichtaufeinanderfolgende Schichten auch gleiche Zusammensetzung aufweisen können.

**Revendications**

1. Procédé pour la fabrication d'éléments de construction en gypse présentant une densité inférieure à 1000 kg/m³, en particulier de plaques de gypse, dans lequel la quantité d'eau de gâchage nécessaire à la réhydratation du liant et au moulage du mélange est introduite exclusivement par des particules imprégnées d'eau ajoutées réparties uniformément, lequel procédé est caractérisé en ce que les particules imprégnées d'eau sont constituées par des copeaux de bois, des granulés de fibre de bois ou de l'écorce, qu'on mélange les particules imprégnées d'eau et le gypse pulvérulent en formant un mélange apte au ruissellement formé de particules individuelles, en ce qu'on met le mélange sous la forme désirée, en particulier pour donner l'épaisseur de plaque désirée à l'élément de construction en gypse, par vibrations, étalement ou roulage ou par application d'une légère pression superficielle, inférieure à environ 1,5 N/mm², de sorte que par contact intime, de l'eau passe des particules poreuses au gypse.

2. Procédé selon la revendication 1, caractérisé en ce que pour fabriquer une structure stratifiée, on exécute le procédé deux ou plusieurs fois en succession immédiate, la fabrication de la deuxième couche ou de la suivante s'effectuant chaque fois tant que la première couche ou la couche inférieure n'a pas encore pris.

3. Procédé selon la revendication 2, caractérisé en ce que l'on fabrique des plaques composites formées de deux à cinq couches, des couches non successives pouvant également présenter la même composition.

**Claims**

1. A process for the production of gypsum components having a density below 1000 kg/m³, particularly plasterboards, in which the quantity of mixing water required for rehydrating the binder and forming the mix is introduced exclusively by water-impregnated particles added in distribution, characterized in that the water-impregnated particles consist of wood chips, wood fibre granulate or bark, that the water-impregnated particles and the powder-form gypsum are mixed to form a free-flowing mixture of individual particles, the mixture thus formed is brought to the required shape, particularly to the required thickness of the gypsum plasterboard, by vibration, levelling or rolling or by the application of a light surface pressure of less than about 1.5 N/mm², so that through intimate contact water passes from the porous particles to the gypsum.

2. A process as claimed in claim 1, characterized in that to produce a layered structure, the process is carried out two or more times in succession, formation of the second or following layer being carried out before the first or lower layer has set.

3. A process as claimed in claim 2, characterized in that composite boards of two to five layers are produced in which non-successive layers may even have the same composition.